## Europäisches Patentamt
## European Patent Office
## Office européen des brevets

(19)

(11) Veröffentlichungsnummer: **0 123 938**
**B1**

(12) **EUROPÄISCHE PATENTSCHRIFT**

(45) Veröffentlichungstag der Patentschrift:
26.07.89

(51) Int. Cl.⁴: **F 16 K 31/06**

(21) Anmeldenummer: 84103568.6

(22) Anmeldetag: 30.03.84

(54) Elektromagnetisch betätigbares Ventil.

(30) Priorität: 30.03.83 DE 3311690

(43) Veröffentlichungstag der Anmeldung:
07.11.84 Patentblatt 84/45

(45) Bekanntmachung des Hinweises auf die Patenterteilung:
26.07.89 Patentblatt 89/30

(84) Benannte Vertragsstaaten:
AT BE CH DE FR GB IT LI LU NL SE

(56) Entgegenhaltungen:
DE-A- 2 160 262
DE-A- 2 243 382
DE-A- 2 714 430
DE-A- 2 821 507
US-A- 3 667 722
US-A- 3 807 441
US-A- 3 982 554

(73) Patentinhaber: HEILMEIER & WEINLEIN Fabrik für
Oel-Hydraulik GmbH & Co. KG, Neumarkter Strasse 26,
D-8000 München 80 (DE)

(72) Erfinder: Brunner, Rudolf, Wankstrasse 23,
D-8011 Baldham (DE)

(74) Vertreter: Patentanwälte Grünecker, Dr. Kinkeldey, Dr.
Stockmair, Dr. Schumann, Jakob, Dr. Bezold, Meister,
Hilgers, Dr. Meyer-Plath, Maximilianstrasse 58,
D-8000 München 22 (DE)

**Beschreibung**

Die Erfindung betrifft ein elektromagnetisch betätigbares Ventil, der im Oberbegriff des Anspruchs 1 genannten Art.

Bei einem aus der DE-OS 2 227 552 bekannten, elektromagnetisch betätigbaren Ventil ist der Hebel, der die Arbeitsbewegung des bewegbaren Magnetelements auf das Betätigungselement zu übertragen hat, in einem vom Magnetgehäuse getrennten Gehäuseteil des Ventilgehäuses untergebracht. Das bewegbare Magnetelement ist über das stationäre Magnetelement hinaus verlängert und bildet eine in dem vom Magnetgehäuse getrennten Gehäuseteil des Ventilgehäuses verschiebbare Trommel, die an einer am stationären Magnetelement befestigten Nabe verschieblich geführt ist. Abgesehen davon, daß dieser Elektromagnet kein Standardmagnet sein kann, sondern eine teure Spezialkonstruktion, baut das Ventil sehr hoch, da zwischen dem Magnetgehäuse und dem eigentlichen Ventilgehäuse noch der Gehäuseteil vorliegt, der nahezu gleich groß ist, wie das Magnetgehäuse selbst.

Man ist bestrebt, die baulichen und preislichen Vorteile von Proportionalmagneten mit verhältnismäßig langem Ankerhub bei niedriger Betätigungskraft für Ventile zu nutzen, die bei kleinem Betätigungshub des Ventilelements eine große Betätigungskraft benötigen. Diese in großer Stückzahl hergestellten, praktisch überall erhältlichen Proportionalmagneten sind leicht, schlank und außerordentlich betriebssicher. Es könnte ein solcher Proportionalmagnet anstelle des in dieser DE-OS gezeigten Magneten eingesetzt werden, wobei dann jedoch wiederum der getrennte Gehäuseteil zur Unterbringung des Hebels erforderlich wäre, der eben die Bauhöhe vergrößert. Nachteilig wäre dann wieder, den oder die Hebel zur Hubuntersetzung in einem Zwischengehäuse unterbringen zu müssen.

Aus der DE-OS 2 243 382 und der DE-OS 2 160 262 sind elektromagnetisch betätigte Ventile bekannt, die jedoch keinen Hebelmechanismus zur Hubüber- bzw. untersetzung zwischen Anker und Ventilelement aufweisen.

Aus der Zeitschrift «und-oder-nor + steuerungstechnik», 9/79, Seite 76, Information 2.2, ist ein magnetisch betätigbares Vorsteuersitzventil bekannt, bei dem der Magnetanker über einen Stößel direkt auf das Ventilschließglied einwirkt. Der Elektromagnet ist verhältnismäßig voluminös, damit er bei kleinem Hub (ca. 0,5 mm) eine möglichst große und gleichbleibende Betätigungskraft ausübt. Derartige Magnettypen sind nicht nur schwer, sondern auch außerordentlich teuer, da sie infolge begrenzter Einsatzmöglichkeiten in kleinen Stückzahlen gebaut werden.

Aus der Zeitschrift «Control Revue», 3/1980, Seite 19, Bild 5, ist ein hydraulisches Wegeventil in Kolbenschieberbauart bekannt, bei dem zwei Proportionalmagnete mit verhältnismäßig langem Ankerhub bei niedriger Betätigungskraft zur Schieberbetätigung vorgesehen sind. Diese Magnettypen sind verhältnismäßig leicht, schlank und preiswert, da sie aufgrund vielfältiger Einsatzmöglichkeiten in hoher Stückzahl gebaut und verwendet werden.

Der Erfindung liegt die Aufgabe zugrunde, ein elektromagnetisch betätigbares Ventil der eingangs genannten Art zu schaffen, bei dem die Bauhöhe gegenüber bekannten Lösungen verringert ist.

Die gestellte Aufgabe wird bei einem elektromagnetisch betätigbaren Ventil der vorgegebenen Gattung erfindungsgemäß durch die im kennzeichnenden Teil des Anspruchs 1 angegebenen Merkmale gelöst.

Bei dieser Ausbildung wurde der Hebel in das Innere des Magnetgehäuses zum oder in das bewegbare Magnetelement verlegt. Damit entfällt ein Zwischengehäuse bzw. ein zwischen dem Magnetgehäuse und dem Ventilgehäuse erforderlicher Raum zum Unterbringen des Hebels. Dies hat weiterhin den Vorteil, daß der Elektromagnet unmittelbar am Ventilgehäuse befestigt werden kann bzw. daß sogar das Ventilgehäuse baulich in das Magnetgehäuse eingegliedert werden kann. Daraus resultiert jedoch eine erhebliche Einsparung in der Bauhöhe.

Günstig ist ebenfalls eine Ausführungsform nach Anspruch 2.

Es wird hiermit eine kompakte Ausführung bei kleiner Bauhöhe erreicht. Im übrigen ist der Hebel in einem Bereich angeordnet, in dem die Funktion des Elektromagneten am wenigsten beeinflußt wird.

Auch bei einer weiteren, zweckmäßigen Ausführungsform nach Anspruch 3 wird eine möglichst geringe Beeinflussung der Funktion des Elektromagneten angestrebt und zudem eine leichte Umrüstbarkeit des Elektromagneten, für den Fall, daß er zum Betätigen eines langhubigen Ventiles eingesetzt werden soll, für das der Hebelmechanismus nicht erforderlich ist. Der Hebelmechanismus liegt hierbei außerhalb des Ankers in dem Spaltbereich zwischen dem Anker und dem stationären Ankerteil.

Eine weitere, zweckmäßige Ausführungsform geht aus Anspruch 4 hervor. Zwei sich scherenartig überkreuzenden Hebel führen dazu, daß die Betätigungskraft und der Betätigungshub des Magnetankers ohne einseitige Belastung auf das Betätigungselement übertragen werden. Die Hebel können grazil ausgebildet werden, da jeder die Hälfte der Betätigungskraft des Magnetankers zu übertragen hat.

Eine besondere stabile Kraftübertragung läßt sich dann erreichen, wenn die Merkmale von Anspruch 5 gegeben sind. Der Einfluß der Reibung bei der Kraftübertragung wird hierbei durch die eingesetzten Rollen auf ein vernachlässigbares Maß reduziert.

Eine weitere, zweckmäßige Maßnahme geht aus Anspruch 6 hervor. Diese Ausbildung der Berührungsbereiche vermeidet großflächige Reibungszonen in denen unzulässig große Anteile der zu übertragenden Kräfte vergeudet würden.

In die gleiche vorteilhafte Richtung zielt eine Ausführungsform, wie sie in Anspruch 7 erläutert wird. Zwischen dem auf das Betätigungselement einwirkenden Hebel und dem Betätigungselement wird hierbei sozusagen eine Gelenkstelle geschaffen, die dafür sorgt, daß vom Hebel ausschließlich in Längsrichtung des Betätigungselementes wirkende Kraftkomponenten für die Betätigung des Ventils genutzt werden und daß das Betätigungselement sich nicht in dem Anker verklemmen kann.

Alternativ dazu wäre auch eine Maßnahme zweckmäßig, wie sie Anspruch 8 andeutet. Eine derartige Kappe könnte aus einem verschleißfesten und dabei gut gleitenden Material bestehen.

Ein weiterer, wichtiger Gedanke ist in Anspruch 9 enthalten. Trotz der geringen Herstellungskosten der Hebel wird mit dieser Herstellungstechnik eine formtreue und maßgenaue Ausbildung gewährleistet.

Dem bei dieser Ausführungsform weitgehend in den Elektromagneten eingegliederten Ventil kann gemäß Anspruch 10 auch noch eine weitere Funktion zugewiesen werden, nämlich die des stationären Ankerteils.

Schließlich ist noch eine Ausführungsform nach Anspruch 11 günstig. Der Hebelmechanismus ist nicht nur im Übertragungsweg vom Magnetanker zum Betätigungselement wirksam eingeschaltet, sondern er wird auch dazu eingesetzt, bei einer Notbetätigung die Betätigungskraft für die Notbetätigung zu erhöhen bzw. den Notbetätigungshub zu untersetzen. Umgekehrt wird die Notbetätigungseinrichtung dieses elektromagnetisch betätigbaren Ventils zur Abstützung der Reaktionskräfte des Hebelmechanismus dann herangezogen, wenn der Elektromagnet auf normalem Wege arbeitet.

Nachstehend werden anhand der Zeichnungen Ausführungsformen des Erfindungsgegenstandes erläutert.

Es zeigen:

Fig. 1 eine schematische Seitenansicht, teilweise im Schnitt, eines elektromagnetisch betätigbaren Ventils,

Fig. 2 einen Längsschnitt durch eine erste Ausführungsform eines Elektromagneten zum Betätigen eines solchen Ventils,

Fig. 2a einen Querschnitt in der Ebene II–II in Fig. 1, unter Weglassung der Magnetspule,

Fig. 3 einen Längsschnitt durch eine weitere Ausführungsform eines Elektromagneten,

Fig. 4 eine weitere Ausführungsform eines Elektromagneten in einem Längsschnitt,

Fig. 5 eine weitere Ausführungsform eines Elektromagneten in einem Längsschnitt,

Fig. 5a einen Querschnitt durch die Ausführungsform von Fig. 5 in der Ebene V–V,

Fig. 6 einen Längsschnitt durch eine weitere Ausführungsform eines Elektromagneten,

Fig. 6a einen Querschnitt in der Ebene VI–VI von Fig. 6,

Fig. 7 einen Längs-Teilschnitt durch eine weitere Ausführungsform,

Fig. 8 einen Längsteilschnitt durch eine weitere Ausführungsform, und

Fig. 9 einen Längsteilschnitt durch eine weitere Ausführungsform eines elektromagnetisch betätigbaren Ventils.

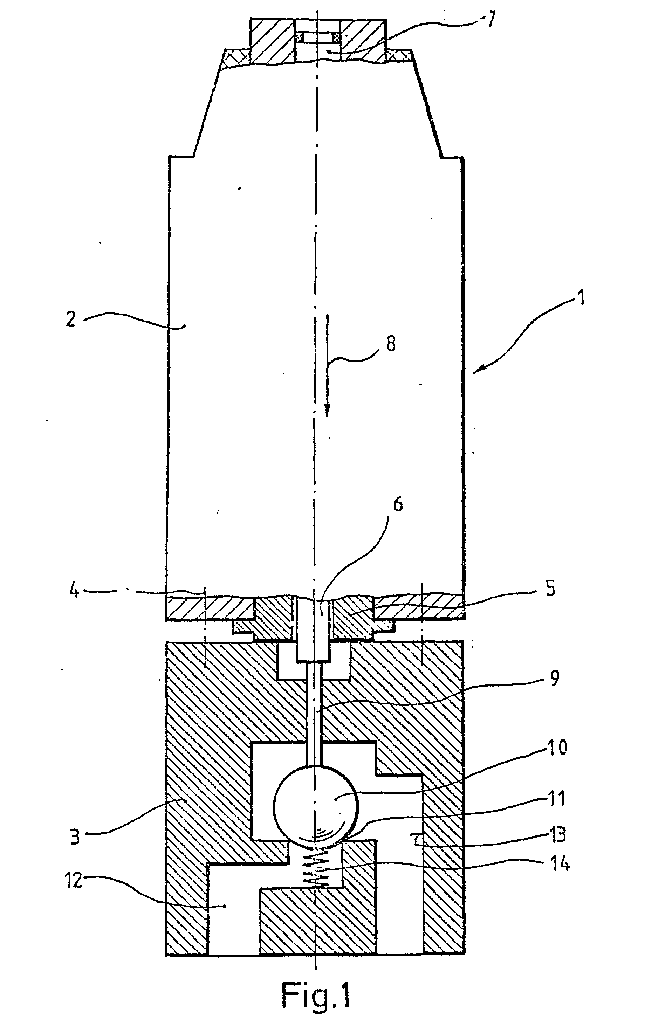

Aus Fig. 1 ist ein magnetisch betätigbares Ventil 1 erkennbar, das hauptsächlich aus einem Magnetgehäuse 2 und aus einem Sitzventil 3 besteht, die über Befestigungselemente 4 miteinander verbunden sind. Das Magnetgehäuse 2 nimmt einen aus Spule und Anker bestehenden Elektromagneten auf. Am unteren Ende des Magnetgehäuses 2 ist ein stationäres Ankerteil 5 erkennbar, durch welches das Ende eines Betätigungselementes 6 herausragt. Am oberen Ende des Magnetgehäuses 2 ist ein Notbetätigungselement 7 erkennbar, mit dem von Hand das Betätigungselement 6 verschoben werden kann. Die Anzugsrichtung des nichtdargestellten Ankers im Magnetgehäuse 2 ist mit 8 bezeichnet. Im Gehäuse des Sitzventiles 3 ist ein Stößel 9 gelagert, der von dem unteren Ende des Betätigungselementes 6 beaufschlagt wird und mit einem Schließglied 10 in Form einer Kugel zusammenarbeitet, das auf einen Ventilsitz 11 auflegbar ist. Der Ventilsitz 11 trennt einen Zuströmkanal 12 von einem Abströmkanal 13. Das Schließglied 10 wird entgegen der Anzugsrichtung 8 von einer Ventilfeder 14 in Öffnungsrichtung belastet. Der im Magnetgehäuse 2 angeordnete Elektromagnet, der nachfolgend anhand verschiedener Ausführungsformen im Detail erläutert werden wird, ist von einer Bauart, bei der über einen verhältnismäßig langen Betätigungshub eine verhältnismäßig niedrige Betätigungskraft aufgebracht wird. Derartige Elektromagneten werden in großen Stückzahlen gebaut und sind deshalb preiswert im Handel erhältlich. Solche Elektromagneten werden in großem Umfang zur Betätigung von langhubigen Ventilen, z.B. Steuerschiebern oder dergleichen, eingesetzt. Für ein kurzhubiges Ventil, z.B. das Sitzventil von Fig. 1, ist es jedoch erforderlich, daß der Elektromagnet über einen verhältnismäßig geringen Betätigungshub eine verhältnismäßig große Betätigungskraft aufbringt. Zu diesem Zweck ist in den nachfolgend erläuterten Ausführungsformen der Elektromagneten ein Hebelmechanismus zwischen dem Betätigungselement für das Ventil und dem Anker des Elektromagneten eingeordnet, der für die Hubunter- und Kraftübersetzung benutzt wird.

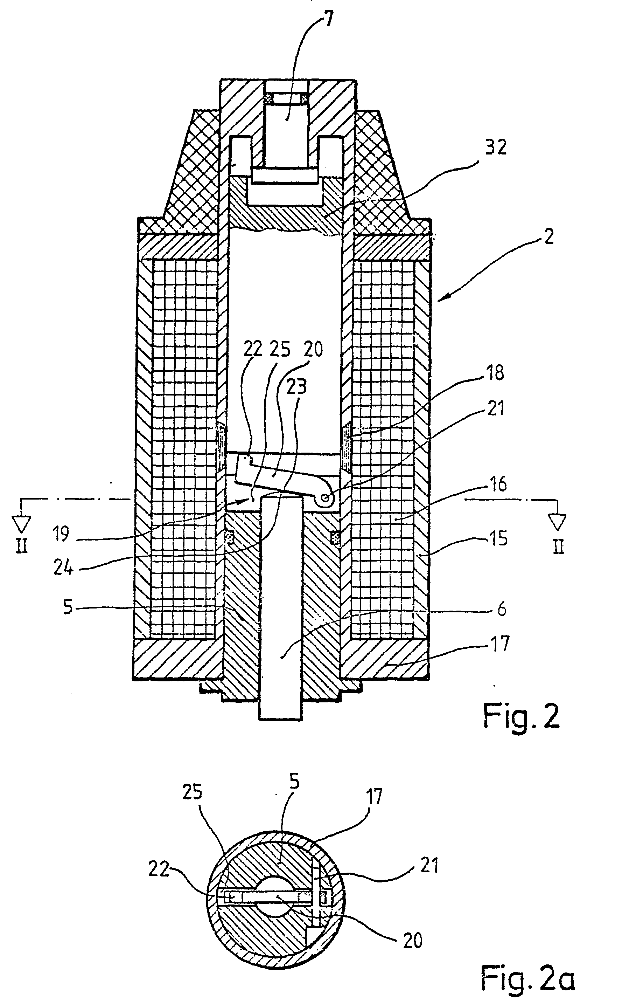

Bei einer Ausführungsform eines Elektromagneten gemäß Fig. 2 und Fig. 2a ist eine Magnetspule 16 in einem Außenrohr 15 untergebracht. Ein Ankerrohr 17 durchsetzt die Innenbohrung der Spule 16 und besitzt einen isolierenden Längsabschnitt 18, der in bekannter Weise das Arbeitsverhalten eines im Ankerrohr 17 verschieblich geführten Magnetelements 32 beeinflußt. Das Magnetelement 32 ist von zylindrischer Gestalt und steht bei nichterregtem Elektromagneten in der in Fig. 2 gezeigten Stellung, in der es gegenüber dem oberen Ende des stationären Ankerteils 5 einen Abstand einnimmt. Das Betätigungselement 6 ist hier als Stab ausgebildet, der eine ballige Endfläche 24 besitzt und mit seinem freien Ende in einen Schlitz 25 ragt, der im oberen Ende des stationären Ankerteils 5 ausgebildet ist. Im Bereich dieses Schlitzes 25 ist ein Hebelmechanismus 19 angeordnet, der aus einem hammerförmigen Hebel 20 mit einer Schwenkachse 21 und einem balligen Druckbereich 22 besteht. Die Schwenkachse 21 wird von einem Zapfen gebildet, der im stationären Ankerteil 5 angeordnet ist und den Schlitz 25 durchsetzt.

Im Ankerrohr 17 ist ferner an dem dem Betätigungselement 6 abgewandten Ende das Notbetätigungselement 7 in Form eines Kolbens verschiebbar untergebracht und abgestützt.

Wenn die Spule 16 mit Strom beaufschlagt wird, bildet sich ein magnetisches Feld, dessen Feldlinien das Magnetelement 32 in Fig. 2 nach unten ziehen, wobei der Anker mit seiner unteren Endfläche den Hebel 20 entgegen dem Uhrzeigersinn um das Schwenklager 21 verschwenkt. Da der Hebelarm, mit dem der Hebel 20 mit einer Auflagefläche 23 am balligen Ende 24 des Betätigungselementes 6 aufliegt, kleiner ist, als der Hebelarm zwischen dem Druckbereich 22 und der Schwenklagerung 21, wird der Betätigungshub des Betätigungselementes 6 kleiner sein, als der Betätigungshub des Magnetelements 32, während die Betätigungskraft am Betätigungselement 6 größer ist, als die vom Magnetelement 32 aufgebrachte Betätigungskraft.

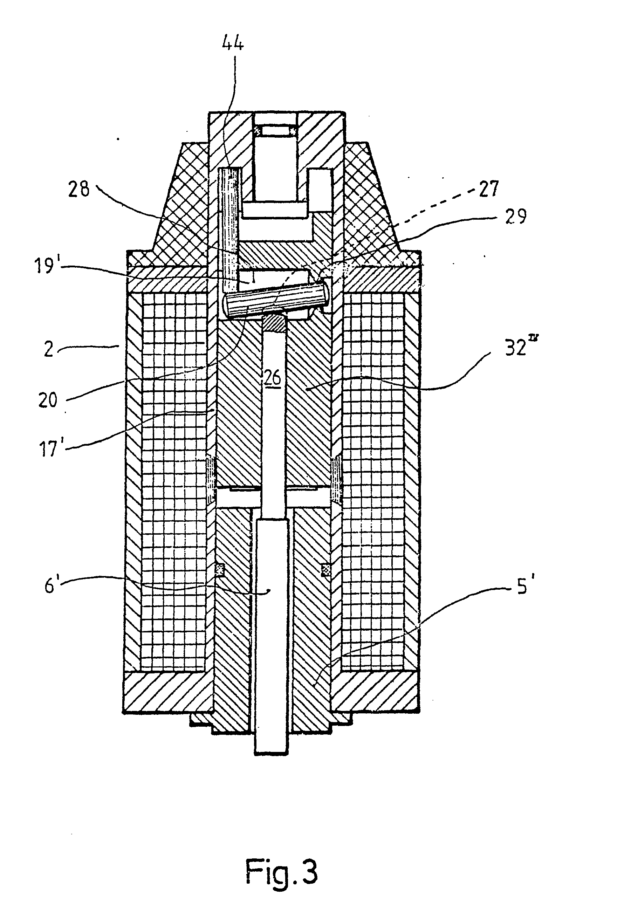

Bei der Ausführungsform von Fig. 3 ist in dem Magnetgehäuse 2 ein gegenüber der vorigen Ausführungsform abgeänderter stationärer Ankerteil 5' und auch ein Betätigungselement 6' vorgesehen, das mit einer Verlängerung 26 sich bis ins Innere des Magnetelementes 32'''', und zwar in eine Aussparung 28 hineinerstreckt und dort mit einer gabelförmigen und gerundeten Auflagefläche 27 endet.

In der Aussparung 28 ist der Hebelmechanismus 19' angeordnet, der einen Hebel 20 in Form eines zylindrischen Zapfens besitzt. Der Hebel 20 ist einer Schwenklagerung 29 des Magnetelementes 32'''' schwenkbar gelagert, so daß er die Bewegung des Magnetelementes mitmachen muß. Der Hebel 20 liegt auf der Verlängerung 26 des Betätigungselementes 6' im Bereich der Auflagefläche 27 auf und wird ferner von oben durch einen Fortsatz 44 abgestützt, der im Ende des Ankerrohres 17' sitzt. Der Fortsatz 44 durchsetzt den obenliegenden Boden des Magnetelementes 32'''' und ragt bis in die Aussparung 28.

Wenn die Spule erregt wird, bewegt sich das Magnetelement 32'''' in Richtung zum stationären Ankerteil 5' hin und zieht dabei über die Schwenklagerung 29 das rechte Ende des Hebels 20 nach unten, wobei der Fortsatz 44 eine zweite Schwenkstelle für den Hebel 20 bildet, die in Bezug auf das Ankerrohr 17' stationär ist. Wiederum infolge der unterschiedlichen Hebelarme zwischen der am Hebel 20 angreifenden Betätigungskraft des Magnetelementes 32'''' und der Reaktionskraft des Betätigungselementes 6' wird dieses mit einer erhöhten Betätigungskraft über einen verkürzten Hub beaufschlagt.

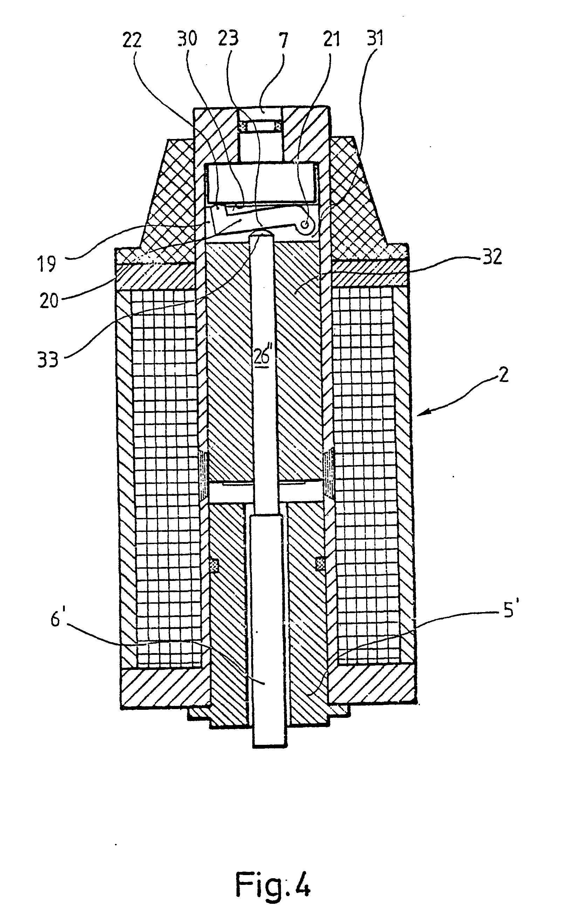

Bei der Ausführungsform des Elektromagneten gemäß Fig. 4 ist der Hebelmechanismus 19, der dem Hebelmechanismus 19 von Fig. 2 annähernd gleich ist, in einem Schlitz 31 im in Anzugsrichtung hinteren Ende des Magnetelementes 32' angeordnet. Dort ist keine Beeinflussung des Magnetflusses durch den Hebelmechanismus 19 zu befürchten. Das Betätigungselement 6' reicht mit seiner Verlängerung 26' in diesen Schlitz 31 und endet dort mit einer balligen Auflagefläche 33, die dem Auflagebereich 23 des Hebels 20 zugeordnet ist. Der Hebel 20 ist um die Schwenklagerung 21 schwenkbar im Magnetelement 32' gelagert, wobei diese Schwenklagerung wieder von einem den Schlitz 31 quer durchsetzenden Zapfen gebildet wird. Der ballige Auflagebereich 22 des Hebels 30 liegt an einer unteren Fläche 30 des Notbetätigungselementes 7 an, das im Ankerrohr abgestützt ist.

Beim Anziehen des Magnetelements 32' bewegt dieses die Schwenklagerung 21 nach unten, so daß der Hebel 20 den Hubweg verringert und dabei die Betätigungskraft steigert.

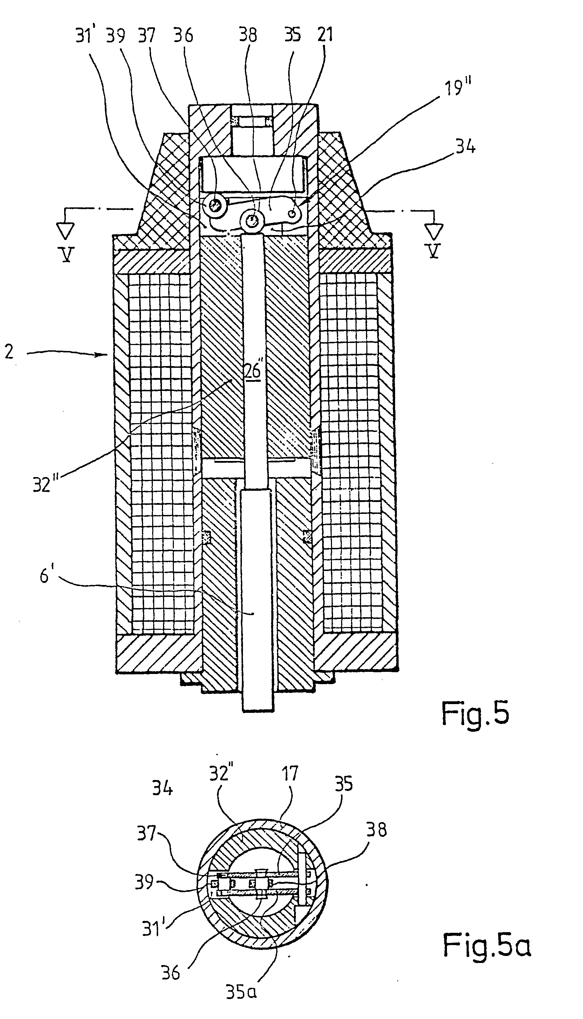

Bei der weiteren Ausführungsform gemäß Fig. 5 und 5a ist der Hebelmechanismus 19'' wiederum in einen Schlitz 31' in dem in Anzugsrichtung hinteren Ende des Magnetelements 32'' untergebracht. In diesen Schlitz ragt die Verlängerung 26'' des Betätigungselementes, und zwar im Bereich einer Sackbohrung 34. Der mit 35 bezeichnete Hebel des Hebelmechanismus 19'' ist als Doppelhebel ausgebildet, d.h. er besteht aus zwei parallelen und gleichartigen angeordneten Hebeln 35 und 35a die in einem Abstand zueinander liegen und gemeinsam um die Schwenklagerung 21 im Anker 32'' schwenkbar sind. Zwischen den beiden Hebeln 35, 35a sind Rollen 39 und 38 um Achsen 36 drehbar gelagert, welche Achsen in den beiden Hebeln befestigt sind.

Beim Anziehen des Magnetelements 32'' wird der Ankerhub wieder untersetzt und die Betätigungskraft erhöht, wobei die Rollen 39 und 38 unter Vermeidung von Reibungskräften auf der Verlängerung 26'' bzw. dem Notbetätigungselement 7' abrollen. Es wird damit auch eine einseitige Verklemmung der Verlängerung 26'', die im Magnetelement 32'' gleitend geführt ist, vermieden.

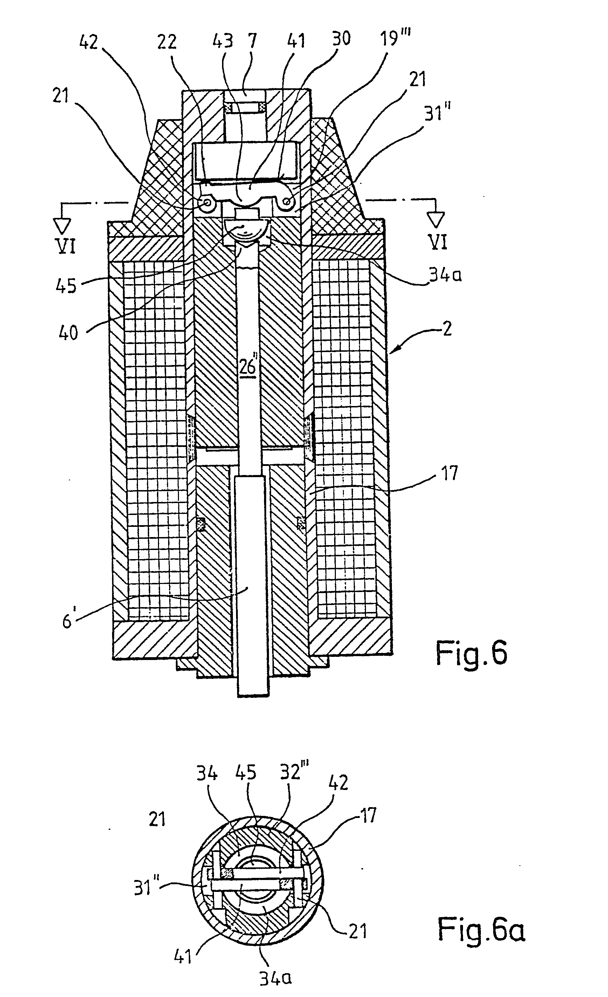

Bei der in Fig. 6 gezeigten Ausführungsform des im Magnetgehäuse 2 angeordneten Elektromagneten ist der Hebelmechanismus 19''' wiederum in einem Schlitz 31'' im in Anzugsrichtung hinteren Ende des Magnetelements 32''' untergebracht. Der Hebelmechanismus 19''' unterscheidet sich von den vorhergehenden dadurch, daß er zwei einander scherenartig überkreuzende Hebel 41, 42 (Fig. 6a) besitzt, die in zwei Schwenklagerungen 21 im Schlitz 31'' gelagert sind, welche Schwenklagerungen 21 von den Schlitz quer durchsetzenden Zapfen gebildet werden. Mit dieser Anordnung der Hebel 41, 42 wird nicht nur die Belastung für jeden Hebel halbiert, sondern auch eine geradlinige Beaufschlagung der Verlängerung 26''' des Betätigungselementes 6' erreicht. Jeder Hebel 41, 42 besitzt eine ballige Auflagefläche 43, mit der er auf dem Schaft eines pilzförmigen Druckelementes 45 aufliegt, das mit einer kugeligen Druckfläche in einer Vertiefung 40 im Ende der Verlängerung 26''' liegt. Das Ende des Ankers 32''' besitzt wieder die Bohrung 34, die zur Aufnahme des Druckelementes 45 mit einem Abschnitt 34a verlängert ist. Die balligen Auflagebereiche 22 beider Hebel 41, 42 stützen sich an der Unterseite 30 des Notbetätigungselementes 7 und damit im Ankerrohr 17 ab.

Beim Anziehen des Magnetelementes 32''' werden die Schwenklagerungen 21 nach unten gezogen, so daß sich die beiden Hebel scherenartig gegeneinander verschwenken und den Betätigungshub des Magnetelements 32 verkleinern, während die Betätigungskraft am Betätigungselement 6 erhöht wird.

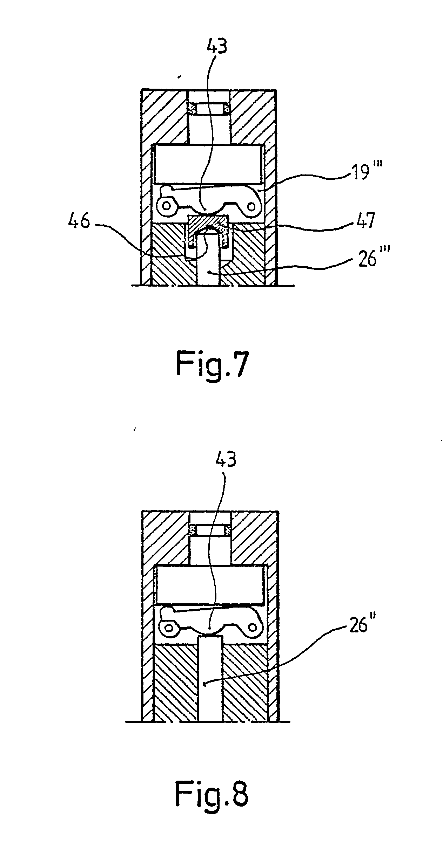

Bei der Ausführungsform gemäß Fig. 7 entspricht der Hebelmechanismus 19''' dem von Fig. 6. Zwischen der balligen Auflagefläche 43 der beiden Hebel und dem ebenfalls ballig ausgebildeten Ende 46 der Verlängerung 26''' ist hier eine auf die Verlängerung 26''' aufgesteckte Kappe 47 vorgesehen, die für eine geradlinige Übertragung der Kräfte und ein verschleißfreies Arbeiten zu sorgen hat.

Bei der Ausführungsform von Fig. 8 wirken die balligen Auflageflächen beider Hebel unmittelbar auf das glatte Ende der Verlängerung 26'' ein. Dank der balligen Auflagefläche 43 und der scherenartig sich überkreuzenden Hebel wird auch hier eine geradlinige Kraftübertragung auf das nichtgezeigte Betätigungselement erreicht.

Bei den vorgeschriebenen Ausführungsformen wird der Hebelmechanismus als Hubuntersetzung bei gleichzeitiger Kraftübersetzung zwischen dem Magnetelement und dem Betätigungselement verwendet. Es könnte ohne weiteres aber der Hebelmechanismus auch zur Hubüber- und Kraftuntersetzung zwischen dem Magnetelement und dem Betätigungselement eingesetzt werden. Beispielsweise würde dann das Betätigungselement mehr zur Seite versetzt angeordnet sein, so daß der Hebelarm zwischen der Anlenkung des Hebels am Magnetelement und der Abstützung kleiner würde, als der Hebelarm zwischen der Abstützung und dem Betätigungselement. Dies wäre für solche Anwendungsfälle zweckmäßig, bei denen die Betätigungskraft nahezu keine Rolle mehr spielt, aber ein langer Betätigungshub im Vordergrund steht. Auch für diesen Anwendungsfall könnte dann ein und derselbe Elektromagnet-Typ verwendet werden.

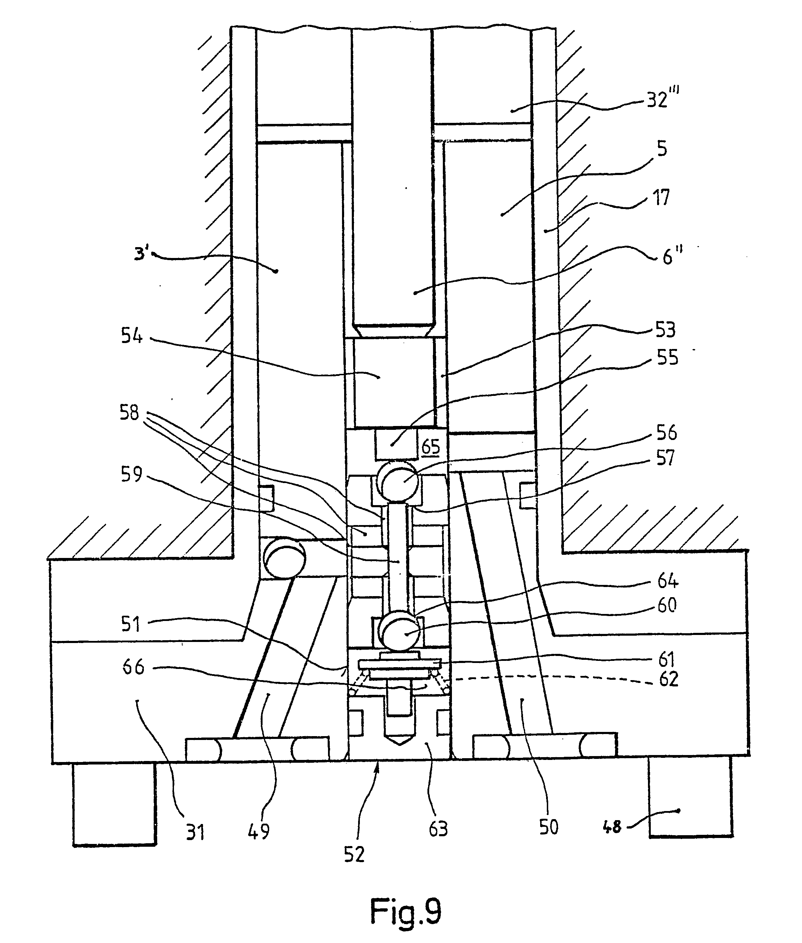

Bei der Ausführungsform von Fig. 9, von der untere Teil des Elektromagneten dargestellt ist, ist ein Gehäuse 3' eines kurzhubigen Sitzventiles baulich in das Ankerrohr 17 des Elektromagneten derart eingegliedert, daß es zumindest einen Teil des stationären Ankerteils ersetzt oder gleich den stationären Ankerteil 5'' bildet. Diesem stationären Ankerteil 5'' steht das Magnetelement 32''' gegenüber. Das Betätigungselement 6'' endet innerhalb des Ankerteils 5'' und ist auf einen in einer Führungsbuchse 53 verschiebbaren Stößel 54 mit einem Fortsatz 55 ausgerichtet.

Die gesamte Baueinheit des elektromagnetisch betätigbaren Ventils mit dem Ventilgehäuse 3' ist mit Befestigungselementen 48, zum Beispiel auf einer Anschlußplatte, derart festgelegt, daß im Gehäuse 3' angeordnete Zuström- und Abströmkanäle 49, 50 mit entsprechenden Kanälen in Strömungsverbindung stehen. Im Gehäuse 3' ist eine Mittelbohrung 51 vorgesehen, in der auch die Führungsbuchse 53 sitzt. Unterhalb der Führungsbuchse 53 sind Einschubelemente 52 eingebracht und durch einen Verschlußstopfen 63 lagegesichert und nach außen hin abgedichtet.

Der Fortsatz 55 ist auf ein erstes Schließglied 56 in Kugelform ausgerichtet, welches mit einem Ventilsitz 57 zusammenarbeitet, der eine Verbindung zwischen dem Zuströmkanal 49, weiterführenden Kanälen 58 und einer Kammer 65 überwacht, die mit dem Abströmkanal 50 in Strömungsverbindung steht. Über einen Stößel 59 steht das Schließglied 56 mit einem weiteren Schließglied 60 in Kugelform in Verbindung, das mit einem zweiten Ventilsitz 64 zusammenarbeitet, der eine Verbindung zwischen den Kanälen 58 und einer Kammer 66 überwacht. In der Kammer 66 ist ein Druckstößel 61 verschiebbar gelagert, der durch eine Ventilfeder 62 belastet wird und das Schließelement 60 in seine Schließstellung und über den Stößel 59 das Schließelement 56 in seine Öffnungsstellung drängt. Die Kraft der Feder 62 wird über den Stößel 54 auch auf das Betätigungselement 6'' und von diesem letztendlich auf das Magnetelement 32''' übertragen, um dieses bei nichterregter Spule in seiner Ausgangsstellung zu halten oder in diese zurückzuführen.

In der gezeigten Stellung des Ventils ist die Spule des Elektromagneten nicht erregt. Die Feder 62 legt das Schließglied 60 auf den Ventilsitz 64 und hebt das Schließglied 56 vom Ventilsitz 57 ab. Die Strömungsverbindung zwischen dem Zuströmkanal 49 und dem Abströmkanal 50 ist offen. Wenn nun die Spule unter Strom gesetzt wird, arbeitet das Magnetelement 32''' in Anzugsrichtung und bringt über den Hebelmechanismus das Betätigungselement 6'' dazu, das Schließelement 56 auf den Ventilsitz 57 aufzusetzen. Der Abströmkanal 50 wird dann nicht mit Druckmittel beaufschlagt. Hingegen wird aus den Kanälen 58 über den Ventilsitz 64 die Kammer 66 mit Druckmittel beaufschlagt, um hier einen Druckausgleich zu bewirken. Der Arbeitshub des Magnetelements 32''' ist größer, als der Schließhub des Ventilschließelementes 56. Auch die Betätigungskraft des Magnetelements 32''' kann geringer sein, als die zum Schließen des Schließgliedes 56 notwendige Schließkraft. Dank des nichtdargestellten Hebelmechanismus zwischen dem Betätigungselement 6'' und dem Magnetelement 32''' wird der Betätigungshub für das Betätigungselement kürzer und dabei die Betätigungskraft so weit vergrößert, daß dieser langhubige Elektromagnet für die Betätigung dieses Sitzventiles nutzbar wird.

Die vorbeschriebenen und in verschiedenen Ausführungsvarianten gezeigten Elektromagneten können auch für Schieberventile mit größeren Betätigungshüben eingesetzt werden. Dazu ist es nur erforderlich in Abhängigkeit von der Ausbildung jeder Ausführungsform, entweder den Hebelmechanismus zu blockieren und für eine direkte Arbeitsverbindung zwischen dem Magnetelement und dem Betätigungselement zu sorgen oder das Magnetelement gegen ein anderes Magnetelement ohne den Hebelmechanismus auszutauschen. Dies ist auf jeden Fall eine preiswertere und mühelosere Maßnahme als die Beschaffung und Lagerhaltung für unterschiedliche Einsatzzwecke bestimmter und solche von der Herstellung und ihrem Aufbau her unterscheidender Elektromagneten. Mit einer einzigen Grundtype eines Elektromagneten können in besonders vorteilhafter Weise verschiedene Anwendungsfälle abgedeckt werden.

**Patentansprüche** .

1. Elektromagnetisch betätigbares Ventil (1), mit einem Ventilgehäuse und einem mittels eines Betätigungselementes (6) bewegbaren Ventilelement (10), mit einem mit dem Ventilgehäuse verbundenen, ein Gehäuse aufweisenden Elektromagneten, der als Magnetelemente wenigstens eine Spule und einen Anker enthält, wobei das Betätigungselement mit dem bei Erregung des Elektromagneten bewegbaren Magnetelement (32, 32', 32'', 32''', 32'''') in Arbeitsverbindung steht, und mit wenigstens einem im Gehäuse fest abgestützten Über- oder Untersetzungshebel (20, 35, 41, 42) in der Arbeitsverbindung zwischen dem bewegbaren Magnetelement und dem Betätigungselement, dadurch gekennzeichnet, daß der Hebel (20, 35, 41, 42) im Inneren des Magnetgehäuses (2) beim oder im bewegbaren Magnetelement (32, 32', 32'', 32''', 32'''') angeordnet ist.

2. Elektromagnetisch betätigbares Ventil nach Anspruch 1, dadurch gekennzeichnet, daß das bewegbare Magnetelement (32, 32', 32'', 32''', 32'''') der in einem mit dem Magnetgehäuse (2) verbundenen Ankerrohr (17, 17') verschiebbar geführte Anker ist, der im Inneren oder an einem Ende eine Aussparung (28, 31, 31', 31'') für den Hebel (20, 35, 41, 42) aufweist, und daß sich der vom Anker bewegbare Hebel am Ankerrohr mittelbar oder unmittelbar abstützt.

3. Elektromagnetisch betätigbares Ventil nach Anspruch 1, dadurch gekennzeichnet, daß im Magnetgehäuse (2) ein stationärer Ankerteil (5) befestigt ist, den das Betätigungselement (6) durchsetzt und an dem der vom Magnetelement (32) bewegbare Hebel (20) an einem Schwenklager (21) abgestützt ist.

4. Elektromagnetisch betätigbares Ventil nach den Ansprüchen 1 bis 3, dadurch gekennzeichnet, daß zwei gleichlange, annähernd parallele und sich scherenartig überkreuzende Hebel (41, 42) vorgesehen sind, die auf das Betätigungselement (6', 26'') gleichartig einwirken.

5. Elektromagnetisch betätigbares Ventil nach den Ansprüchen 1 bis 3, dadurch gekennzeichnet, daß der vom Hebel (35, 35a) mit dem Magnetelement (32'') gekoppelte Hebel (35, 35a) als Doppelhebel ausgebildet ist und drehbare Rollen (38, 39) aufweist, die an der stationären Abstützung und am Betätigungselement (26'', 6') anliegen.

6. Elektromagnetisch betätigbares Ventil nach wenigstens einem der Ansprüche 1 bis 4, dadurch gekennzeichnet, daß die Berührungsstellen zwischen dem Hebel und dem Betätigungselement bzw. zwischen dem Hebel und der Abstützung als gerundete Auflageflächen (24, 27, 33, 43) ausgebildet sind.

7. Elektromagnetisch betätigbares Ventil nach wenigstens einem der Ansprüche 1 bis 6, dadurch gekennzeichnet, daß das freie Ende des Betätigungselementes (6', 26'') eine, vorzugsweise kegelige, Vertiefung (40) aufweist, in der ein pilzförmiges Druckelement (45) mit einer balligen Druckfläche liegt, dessen Schaft an der (den) Auflagefläche(n) (43) des Hebels bzw. der Hebel (41, 42) anliegt.

8. Elektromagnetisch betätigbares Ventil nach wenigstens einem der Ansprüche 1 bis 6, dadurch gekennzeichnet, daß auf das freie Ende (26''') des Betätigungselementes (6', 6'') eine Kappe (47) aufgesteckt ist.

9. Elektromagnetisch betätigbares Ventil nach wenigstens einem der Ansprüche 1 bis 8, dadurch gekennzeichnet, daß jeder Hebel (35, 35a, 20, 41, 42) ein Blech-Stanzteil oder -Preßteil ist.

10. Elektromagnetisch betätigbares Ventil nach wenigstens einem der Ansprüche 1 bis 9, dadurch gekennzeichnet, daß der stationäre Ankerteil (5) das Ventilgehäuse bildet.

11. Elektromagnetisch betätigbares Ventil nach wenigstens einem der Ansprüche 1 bis 10, wobei ein den Elektromagneten durchsetzendes Handbetätigungselement, z.B. zur Notbetätigung des Ventilelements, vorgesehen ist, dadurch gekennzeichnet, daß das Notbetätigungselement (7) über den Hebel (35, 41, 42) auf das Betätigungselement einwirkt.

**Claims**

1. An electromagnetic valve (1) comprising: a valve body; a lid (10) movable by means of an actuating element (6); an electromagnet which is connected to the valve body and which has a casing and which comprises as magnet elements at least one winding and an armature, the actuating element being operatively connected to the magnet element (32, 32', 32'', 32''', 32''''), the same moving in response to energization of the electromagnet; and at least one step-up or stepdown lever (20, 35, 41, 42) which is fixedly borne in the casing and which is disposed in the operative connection between the lid and the actuating element, characterised in that the lever (20, 35, 41, 42) is disposed on or in the the movable magnet element (32, 32', 32'', 32''', 32'''') inside the magnet casing (2).

2. A valve according to claim 1, characterised in that the movable magnet element (32, 32', 32'', 32''', 32'''') is the armature which is movingly guided in an armature tube (17, 17') connected to the magnet casing (2) and which is formed in its interior or at one end with a recess (28, 31, 31', 31'') for the lever (20, 35, 41, 42), and the lever movable by the armature bears directly or indirectly on the armature tube.

3. A valve according to claim 1, characterised in that a stationary armature part (5) is secured in the magnet casing (2), extends through the actuating element (6) and bears by way of a pivot bearing (21) on the lever (20) movable by the magnet element (32).

4. A valve according to claims 1–3, characterised in that two equally long and substantially parallel levers (41, 42) which cross over one another scissors fashion are provided and act similarly on the actuating element (6', 26'').

5. A valve according to claims 1–3, characterised in that the lever (35, 35a) coupled with the magnet element (32'') is a double-armed lever and has rotatable rollers (38, 39) which bear on the stationary support and on the actuating element (26'', 6').

6. A valve according to at least one of claims 1–4, characterised in that the contact zones between the lever and the actuating element or between the lever and the support are rounded support surfaces (24, 27, 33, 43).

7. A valve according to at least one of claims 1–6, characterised in that the free end of the actuating element (6', 26'') is formed with a preferably conical recess (40) in which a mushroom-shaped pressure element (45) with a spherical pressure surface is disposed, the shank or stem of the pressure element (45) engaging the or each bearing surface (43) of the or each lever (41, 42).

8. A valve according to at least one of claims 1–6, characterised in that a cap (47) is pushed on to the free end (26''') of the actuating element (6', 6'').

9. A valve according to at least one of claims 1–8, characterised in that each lever (35, 35a, 20, 41, 42) is a sheet metal stamping or pressing.

10. A valve according to at least one of claims 1–9, characterised in that the stationary armature part (5) forms the valve body.

11. A valve according to at least one of claims 1–10, a manual actuating element, for example, for emergency operation of the lid, which extends through the electromagnet being provided, characterised in that the emergency actuating element (7) acts by way of the lever (35, 41, 42) on the actuating element.

**Revendications**

1. Valve à commande électromagnétique (1) avec une cage de valve et un élément de valve (10) déplaçable au moyen d'un élément de commande (6), avec un électro-aimant rattaché à la cage de valve et présentant une carcasse, qui comporte en tant qu'éléments magnétiques au moins une bobine et une armature, l'élément de commande étant en liaison active avec l'élément magnétique (32, 32', 32'', 32''', 32'''') déplaçable lors de l'excitation de l'électro-aimant, et avec au moins un levier de multiplication ou de démultiplication (20, 35, 41, 42) solidement appuyé dans la carcasse et placé dans la liaison active entre l'élément magnétique mobile et l'élément de commande, caractérisée en ce que le levier (20, 35, 41, 42) est disposé à l'intérieur de la carcasse magnétique (2), près de ou dans l'élément magnétique mobile (32, 32', 32'', 32''', 32'''').

2. Valve à commande électromagnétique selon la revendication 1, caractérisée en ce que l'élément magnétique mobile (32, 32', 32'', 32''', 32'''') est l'armature guidée de manière mobile dans un tube d'armature (17, 17') rattaché à la carcasse magnétique (2), qui présente, à l'intérieur ou à l'extrémité, un évidement (28, 31, 31', 31'') pour le levier (20, 35, 41, 42), et que le levier pouvant être déplacé par l'armature prend directement ou indirectement appui sur le tube d'armature.

3. Valve à commande électromagnétique selon la revendication 1, caractérisée en ce que dans la carcasse magnétique (2) est fixé un élément stationnaire (5) de l'armature qui est traversé par l'élément de commande (6) et sur lequel le levier (20) déplaçable par l'élément magnétique (32) prend appui sur un palier pivotant (21).

4. Valve à commande électromagnétique selon l'une des revendications 1 à 3, caractérisée en ce qu'elle comprend deux leviers (41, 42) d'égale longueur, à peu près parallèles et se croisant en forme de ciseaux qui agissent pareillement sur l'élément de commande (6', 26'').

5. Valve à commande électromagnétique selon l'une des revendications 1 à 3, caractérisée en ce que le levier (35, 35a) couplé avec l'élément magnétique (32'') par le levier (35, 35a) est conformé en levier double et comprend des galets tournants (38, 39) qui sont appliqués contre l'appui stationnaire et contre l'élément de commande (26'', 6').

6. Valve à commande électromagnétique selon au moins l'une des revendications 1 à 4, caractérisée en ce que les points de contact entre le levier et l'élément de commande et respectivement entre le levier et l'appui sont conformés en surfaces d'appui arrondies (24, 27, 33, 43).

7. Valve à commande électromagnétique selon au moins l'une des revendications 1 à 6, caractérisée en ce que l'extrémité libre de l'élément de commande (6', 26'') présente un creux (40), de préférence conique, dans lequel est placé un élément de pression (45) en forme de champignon avec une surface de pression bombée, dont la tige est appliquée contre la (les) surface(s) d'appui (43) du et respectivement des levier(s) (41, 42).

8. Valve à commande électromagnétique selon au moins l'une des revendications 1 à 6, caractérisée en ce que sur l'extrémité libre (26''') de l'élément de commande (6', 6'') est emboîté un capuchon (47).

9. Valve à commande électromagnétique selon au moins l'une des revendications 1 à 8, caractérisée en ce que chaque levier (35, 35a, 20, 41, 42) est une pièce découpée ou estampée en tôle.

10. Valve à commande électromagnétique selon au moins l'une des revendications 1 à 9, caractérisé en ce que l'élément stationnaire (5) de l'armature constitue la cage de valve.

11. Valve à commande électromagnétique selon au moins l'une des revendications 1 à 10, dans laquelle est prévu un élément de commande manuelle traversant l'électro-aimant, par exemple pour l'actionnement d'urgence de l'élément de valve, caractérisée en ce que l'élément de manœuvre d'urgence (7) agit sur l'élément de commande par l'intermédiaire du levier (35, 41, 42).

Fig.1

Fig. 2

Fig. 2a

Fig.3

Fig.4

Fig.5

Fig.5a

Fig.6

Fig.6a

Fig.7

Fig.8

Fig.9